# EUROPEAN PATENT APPLICATION

(11) **EP 4 474 986 A1**
(43) Date of publication of application: **11.12.2024**
(21) Application number: 23177622.0
(22) Date of filing: 06.06.2023
(51) Int. Cl.: G06F 9/455

(54) **OPERATION OF A MICROKERNEL-BASED OPERATING SYSTEM**

(71) Applicant: Elektrobit Automotive GmbH, 91058 Erlangen (DE)
(72) Inventor: Dr. Hildebrand, Uwe, 81739 München (DE)
(74) Representative: Continental Corporation

(57) **Abstract**

The present invention is related to a method of operating a microkernel-based operating system and a corresponding computer program code. The invention is further related to a processing system comprising at least one processing core on which a microkernel-based operating system is running, and to a vehicle using such a processing system. The microkernel-based operating system is initially operated (S1) in a first criticality mode of a plurality of supported criticality modes. In case a condition is determined (S2) that requires a transition to a second criticality mode of the plurality of supported criticality modes, settings of the microkernel-based operating system are adapted (S3) in accordance with the second criticality mode. The microkernel-based operating system is then operated (S4) in the second criticality mode.

## Description

The present invention is related to a method of operating a microkernel-based operating system and a corresponding computer program code. The invention is further related to a processing system comprising at least one processing core on which a microkernel-based operating system is running, and to a vehicle using such a processing system.

A variety of applications or tasks fulfilling various purposes may be executed on a central processing unit (CPU) cluster on top of an operating system. These tasks may belong to different classes of criticality, e.g., distinguished by specific safety or security requirements allocated to those tasks. Usually, such specific safety or security requirements demand freedom from interference or at least limited interference of corresponding tasks in spatial and temporal domain. A commonly used approach to achieve (spatial) freedom from interference is to allocate critical tasks on dedicated CPU cores that are only used for such tasks, or to run critical tasks in an isolated execution environment that typically has its own operating system.

For example, EP 3 200 114 A1 discloses a trusted execution environment on a computing device within an enterprise. The trusted execution environment allows invocation of trusted enterprise applications without hindering external or non-enterprise apps from running on the same computing device. Each of the trusted apps can interact with other trusted apps on the same enterprise computing device in a trusted manner such that other apps or untrusted network connections are prevented for access to the trusted apps. The computing device, however, also executes non enterprise applications which operate independently of the enterprise apps in the same address space using the same unmodified operating system as the enterprise apps on the computing device. The trusted execution environment therefore restricts interprocess communication to be only within the set of enterprise apps and also permits unimpeded operation of other apps under the same off the shelf operating system.

Monolithic operating systems with a large range of functions are not particularly well suited for meeting the requirements with regard to security and safety in the respective operating modes, e.g., in the automotive context. At the very least, it requires great effort to obtain ASIL certification, for example. This becomes easier when microkernel-based operating systems are used. A microkernel, or µ-kernel, is the near-minimum amount of software that can provide the mechanisms needed to implement an operating system. These mechanisms include low-level management of address space, thread management, and interprocess communication.

A drawback of the known solutions is that different operating systems are typically needed in different criticality modes or security modes. This makes interprocess communication between software components more complicated. Furthermore, there is only a limited or no re-use of software components, leading to increased implementation, integration, and maintenance efforts. It would thus be desirable to be able to utilize any CPU core for tasks of all criticality classes using a common operating system.

It is an object of the present invention to provide an improved solution for operation of a microkernel-based operating system.

This object is achieved by a method according to claim 1, by a computer program code according to claim 13, which implements this method, and by a processing system according to claim 14. The dependent claims include advantageous further developments and improvements of the present principles as described below.

According to a first aspect, a method of operating a microkernel-based operating system comprises the steps of:
- operating the microkernel-based operating system in a first criticality mode of a plurality of supported criticality modes;
- determining a condition that requires a transition to a second criticality mode of the plurality of supported criticality modes;
- adapting settings of the microkernel-based operating system in accordance with the second criticality mode; and
- operating the microkernel-based operating system in the second criticality mode.

Accordingly, a computer program code comprises instructions, which, when executed by at least one processor, cause the at least one processor to perform the following steps of operating a microkernel-based operating system:
- operating the microkernel-based operating system in a first criticality mode of a plurality of supported criticality modes;
- determining a condition that requires a transition to a second criticality mode of the plurality of supported criticality modes;
- adapting settings of the microkernel-based operating system in accordance with the second criticality mode; and
- operating the microkernel-based operating system in the second criticality mode.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, a processing system comprises at least one processing core on which a microkernel-based operating system is running, wherein the processing system is configured to:
- operate the microkernel-based operating system in a first criticality mode of a plurality of supported criticality modes;
- determine a condition that requires a transition to a second criticality mode of the plurality of supported criticality modes;
- adapt settings of the microkernel-based operating system in accordance with the second criticality mode; and
- operate the microkernel-based operating system in the second criticality mode.

According to the invention, support for different criticality levels and transitions between them is provided in the operating system itself. This allows using the same microkernel as operating system in all criticality modes of the CPU subsystem rather than requiring specific operating systems, like an open portable trusted execution environment (OP-TEE) operating system for trusted mode. In this way, a better software re-use is possible, which results in reduced software implementation, integration, and maintenance efforts. The same applications, once implemented for a microkernel, can be used in different criticality modes, i.e., in different target configurations. For example, there is no need to have another implementation of an application for an OP-TEE operating system.

In an advantageous embodiment, the plurality of supported criticality modes comprises a normal mode and at least one of a safe mode and a trusted mode.

Normal mode is the standard criticality mode. In this mode, only standard applications would typically be executed, as no particular measures are taken by the microkernel-based operating system to limit or avoid interference or isolation. The corresponding threads are preferably simply scheduled based on their priorities or possible other scheduling parameters used by the implemented scheduler.

Main goal of safe mode is to provide sufficient freedom from interference so that safety applications can be reliably executed. Allowing only threads of safety applications to be scheduled on a dedicated CPU core may, however, be a too hard restriction from a performance perspective, as safety applications usually are small, often cyclic monitoring or supervision functions to be executed, which will not fully load a CPU core. Therefore, it may be desirable to allow both, safe applications, and standard applications, to be scheduled on the same CPU core. This can be accomplished by either allowing limited scheduling of standard applications also in safe mode or by switching between safe mode and normal mode.

Depending on the system-on-chip and CPU architecture, switching a CPU core to trusted mode can require bringing the CPU core into a different hardware state, so that hardware access to critical or sensitive hardware functions is enabled on the system-on-chip, which is disabled otherwise. An example is the Trustzone hardware signal on ARM based architectures. As in trusted mode access to such critical or sensitive functions may be possible, preferably only threads of trusted applications are scheduled in this criticality mode. For a Trustzone-enabled ARM architecture, the secure monitor of the ARM Trusted firmware may be used to switch the CPU core into the secure state and then re-enter the microkernel in trusted mode.

Usually, safe applications would be configured to only be executed in safe mode and trusted applications would be configured to only run in trusted mode. However, if desired and configured accordingly, both safe and trusted applications may also be executed in normal mode. Basically, it only depends on the configured allowed criticality modes for each application or thread in which mode it will be scheduled on a core by the microkernel-based operating system.

In an advantageous embodiment, conditions that define transitions between criticality modes are statically defined by configuration settings of the microkernel-based operating system. The use of configuration settings, preferably static configuration settings, allows achieving a configurable level of freedom from interference in each criticality mode.

In an advantageous embodiment, transitions between the criticality modes are driven by events. Transitions between criticality modes are expected to be mainly driven by events. For example, events may be related to one or more of interrupts, such as hardware interrupts by hardware timers used for periodic safety tasks, exceptions, such as page fault exceptions, completion of threads, and absence of threads to be scheduled. In particular for safe mode and for trusted mode, the transition back to normal mode might simply be that a safety application has finished its currently due task, or that a trusted application has been completed and there are no more threads of safe or trusted applications ready for being scheduled on a CPU core. All these events can easily be formulated as mode transition conditions.

In an advantageous embodiment, settings of the microkernel-based operating system that are adapted are related to one or more of scheduling of threads, control and handling of interrupts, handling of exceptions, use of memory, handling of caches, and interprocess communication. By configuring which threads, interrupts and interprocess communications are allowed on each CPU core in each of the supported criticality modes, a desired level of freedom from temporal interference can easily be realized. Freedom from spatial interference can be achieved by configuring the use of memory.

In an advantageous embodiment, scheduling of threads is adapted based on one or more of information about the criticality modes in which a thread is allowed to be scheduled and thread priorities for the criticality modes that are included in a thread control block. In order to support the different criticality modes in the scheduler, it is advantageous if thread priorities for each of the criticality modes are added in the thread control block that is created whenever a new thread is created by the microkernel-based operating system. For example, a corresponding thread priority field could be a byte value allowing up to 256 priority levels, with one of these values specifying that scheduling is not allowed in this criticality mode. Such a thread priority level field would then be available for each of the supported criticality modes. Alternatively, a common priority level field applicable for all of the criticality modes can be kept and a flag is added in the thread control block for each criticality mode, indicating whether or not the thread is allowed to be scheduled in a particular criticality mode.

Advantageously, scheduling priorities or scheduling allowance settings for threads executed in safe mode and threads executed in trusted mode are statically fixed by configuration settings. At least it should be prevented that normal mode threads can change scheduling parameters for threads configured for safe mode or trusted mode.

While scheduling priorities or scheduling allowance settings are one possible solution for handling different criticality modes on the same CPU core, also more fine-grained scheduling parameters can be implemented, such as only allowing a certain time-slice percentage or CPU load share for a certain thread in a particular criticality mode.

In an advantageous embodiment, control and handling of interrupts is adapted by configuring, in software or supported by hardware, which interrupts are allowed to be handled or processed in a particular criticality mode and which not. For each of the supported criticality modes it is preferably configured which interrupts are allowed to be handled or processed in a particular mode and which are not. As it is expected that most of the interrupts are handled by normal mode threads, for normal mode it is advantageous to list all interrupts that are not allowed in normal mode, while for safe mode and trusted mode it is preferable to list the interrupts that are allowed.

While generally allowing certain interrupts towards individual CPU cores in safe mode or trusted mode by defined static configuration setting of the microkernel-based operating system is one possible solution for handling different criticality modes on the same CPU core, also more fine-grained interrupt control mechanisms may be implemented, such as allowing certain interrupts only with a configured rate.

As already explained above, interrupts may be one of the specific events that can trigger a criticality mode change for a CPU core in the microkernel-based operating system. For example, a periodic safety application shall be triggered at expiry of a hardware timer. There can be embodiments with hardware supporting the above-mentioned interrupt control mechanisms in order to limit or avoid involvement of software within the microkernel-based operating system. The interrupt controller could allow to have multiple interrupt configurations for the different criticality modes set up in hardware, so that the microkernel-based operating system would just need to activate another interrupt configuration setting when switching between criticality modes, i.e., just set the selected criticality mode in the interrupt controller for applying one of the pre-configured interrupt configuration settings. Also, hardware support for interrupt rate limitation will be beneficial and reduce the temporal interference towards the microkernel-based operating system.

In an advantageous embodiment, handling of exceptions is adapted to individual criticality modes. In this way, each possible exception is handled appropriately in each of the criticality modes. For example, handling of page fault type of exceptions preferably considers whether the affected memory page is allowed to be accessed at all in the present criticality mode. Another aspect of exceptions is that e.g., in case of using ARMv8-A CPU cores, a transition to trusted mode is usually triggered by software executing a secure monitor call (SMC) instruction, leading to an SMC exception on the same core. Furthermore, particular memory pages may be defined for triggering a criticality mode switch when being accessed. Also other specific exceptions may be used to trigger a criticality mode switch.

In an advantageous embodiment, use of memory is adapted by allowing access only to memory that is reserved in advance for a particular criticality mode. Advantageously, all memory, including I/O memory and shared memory, that is needed by safe applications or trusted applications is reserved in advance. This reservation may be provided as a statically fixed configuration settings for the microkernel-based operating system. In this way, freedom from spatial interference is ensured for safety tasks and trusted tasks. The remaining memory can then also be dynamically allocated for standard applications.

In an advantageous embodiment, handling of caches is adapted by flushing caches when switching between particular criticality modes. Flushing of caches may be necessary when switching between certain criticality modes, e.g., to make sure that sensitive data is not leaking outside trusted mode.

In an advantageous embodiment, interprocess communication is adapted by distinguishing at least between two or more of allowed interprocess communication, forbidden interprocess communication, and limited interprocess communication. Interprocess communication may simply be considered as a special case of interrupt control. For example, different interrupts can be used to distinguish between allowed interprocess communication, forbidden interprocess communication and limited interprocess communication. However, also more sophisticated control mechanisms for interprocess communication can be implemented, like only allowing interprocess communication from certain peer threads or with a certain rate.

Advantageously, a vehicle comprises a processing system according to the invention. For example, the processing system may be a high-performance computer responsible for driver assistance or (semi-)autonomous driving.

Further features of the present invention will become apparent from the following description and the appended claims in conjunction with the figures.

### Figures

- Fig. 1: schematically illustrates a method according to the invention of operating a microkernel-based operating system;
- Fig. 2: schematically illustrates an exemplary state machine for three supported criticality modes;
- Fig. 3: schematically illustrates a processing system, in which a solution according to the invention is implemented; and
- Fig. 4: schematically illustrates a motor vehicle in which a solution according to the invention is implemented.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode, or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

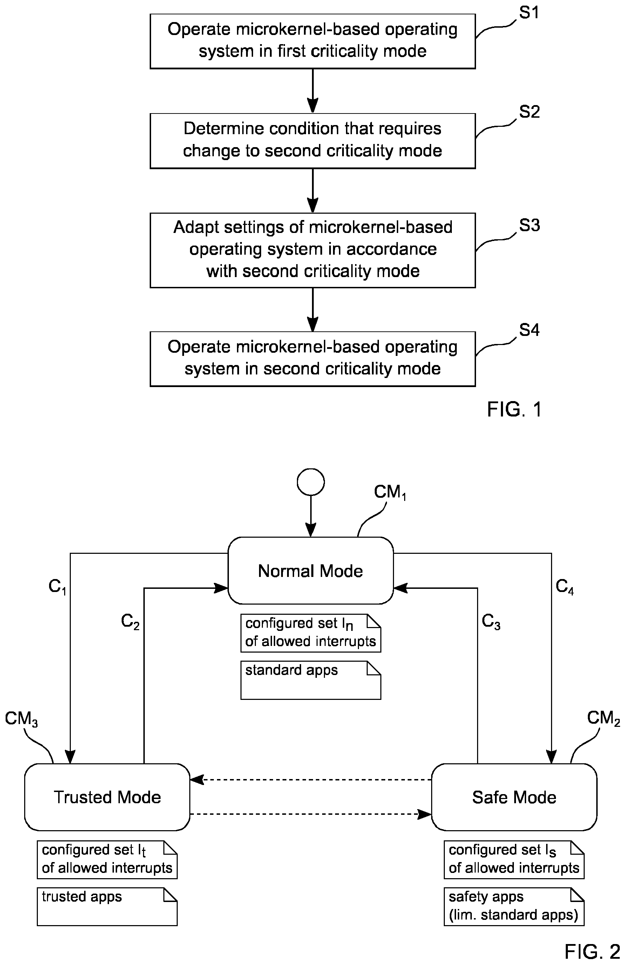

Fig. 1 schematically illustrates a method according to the invention of operating a microkernel-based operating system. The microkernel-based operating system is initially operated S1 in a first criticality mode of a plurality of supported criticality modes. For example, the supported criticality modes comprise a normal mode and at least one of a safe mode and a trusted mode. In case a condition is determined S2 that requires a transition to a second criticality mode of the plurality of supported criticality modes, settings of the microkernel-based operating system are adapted S3 in accordance with the second criticality mode. The conditions that define transitions between criticality modes may, for example, be statically defined by configuration settings of the microkernel-based operating system. The transitions between the criticality modes may be driven by events, which may be related to one or more of interrupts, exceptions, completion of threads, and absence of threads to be scheduled. Preferably, the settings of the microkernel-based operating system that are adapted S3 are related to one or more of scheduling of threads, control and handling of interrupts, handling of exceptions, use of memory, handling of caches, and interprocess communication. Once the adaptations are completed, the microkernel-based operating system is operated S4 in the second criticality mode.

Fig. 2 schematically illustrates an exemplary state machine for three supported criticality modes CMᵢ, namely normal mode CM₁, safe mode CM₂, and trusted mode CM₃. Also shown is a potential configuration of which kind of threads or applications are allowed to be scheduled on a CPU core in each of these criticality modes CMᵢ. While the diagram depicts that different sets of allowed (unmasked) interrupts can apply to different criticality modes, other configuration settings specific to a criticality mode, like e.g., allowed interprocess communication, are not shown. The supported transitions between criticality modes CMᵢ are controlled by configurable conditions C₁₋C₄, which usually would be derived from events, such as certain interrupts or exceptions. In the depicted example, the mode transitions between safe mode CM₂ and trusted mode CM₃ are shown as dotted lines, as these transitions are not always needed.

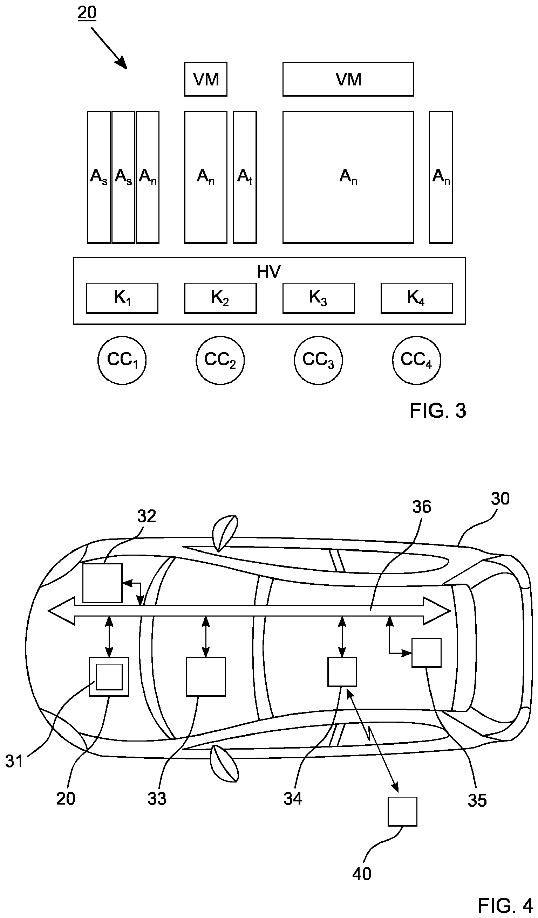

Fig. 3 schematically illustrates a processing system 20, in which a solution according to the invention is implemented. In this example, several safety applications Aₛ, trusted applications At and standard applications Aₙ are illustrated, which are executed on top of a microkernel-based hypervisor HV on a CPU subsystem with four CPU cores CCᵢ. On the microkernels Ki running on each of the CPU cores CCᵢ support for different criticality modes is implemented, in particular for normal mode, safe mode, and trusted mode. Trusted applications At may be executed on any CPU core CCᵢ in trusted mode. Virtual machines VM may be running on the hypervisor HV, which may, for example, execute a rich operating system. As an example, a Linux system may be running in a virtual machine VM. Trusted applications At may be triggered, for example, by such a Linux system using a secure monitor call.

Fig. 4 schematically shows a motor vehicle 30, in which a solution in accordance with the invention is implemented. The motor vehicle 30 in this example has an autonomous driving controller 31, a navigation system 32, and an infotainment system 33. The autonomous driving controller 31 is implemented on a processing system 20 according to the invention. In principle, any of the mentioned systems or controllers may implement processing system 20 according to invention. By means of a data transmission unit 34, a connection to a backend 40 can be established, e.g., to receive software updates for the components of the motor vehicle. A memory 35 is available for storing data. The data exchange between the different components of the motor vehicle 30 takes place via a network 36.

### Reference numerals

- 20: Processing system
- 30: Motor vehicle
- 31: Autonomous driving controller
- 32: Navigation system
- 33: Infotainments system
- 34: Data transmission unit
- 35: Memory
- 36: Network
- 40: Backend

- Aₙ: Standard application
- Aₛ: Safety application
- At: Trusted application
- Cᵢ: Condition
- CCᵢ: Core
- CMᵢ: Criticality mode
- HV: Hypervisor
- Kᵢ: Microkernel
- VM: Virtual machine

- S1: Operate microkernel-based operating system in first criticality mode
- S2: Determine condition that requires change to second criticality mode
- S3: Adapt settings of microkernel-based operating system in accordance with second criticality mode
- S4: Operate microkernel-based operating system in second criticality mode

## Claims

1. A method of operating a microkernel-based operating system, the method comprising:
- operating (S1) the microkernel-based operating system in a first criticality mode (CMᵢ) of a plurality of supported criticality modes (CMᵢ);
- determining (S2) a condition (Cᵢ) that requires a transition to a second criticality mode (CMᵢ) of the plurality of supported criticality modes (CMᵢ);
- adapting (S3) settings of the microkernel-based operating system in accordance with the second criticality mode (CMᵢ); and
- operating (S4) the microkernel-based operating system in the second criticality mode.

2. The method according to claim 1, wherein the plurality of supported criticality modes (CMᵢ) comprises a normal mode and at least one of a safe mode and a trusted mode.

3. The method according to claim 1 or 2, wherein conditions (Cᵢ) that define transitions between criticality modes (CMᵢ) are statically defined by configuration settings of the microkernel-based operating system.

4. The method according to one of the preceding claims, wherein transitions between the criticality modes (CMᵢ) are driven by events.

5. The method according to claim 4, wherein events are related to one or more of interrupts, exceptions, completion of threads, and absence of threads to be scheduled.

6. The method according to one of the preceding claims, wherein settings of the microkernel-based operating system that are adapted (S3) are related to one or more of scheduling of threads, control and handling of interrupts, handling of exceptions, use of memory, handling of caches, and interprocess communication.

7. The method according to claim 6, wherein scheduling of threads is adapted based on one or more of information about the criticality modes (CMᵢ) in which a thread is allowed to be scheduled and thread priorities for the criticality modes (CMᵢ) that are included in a thread control block.

8. The method according to claim 6 or 7, wherein control and handling of interrupts is adapted (S3) by configuring, in software or supported by hardware, which interrupts are allowed to be handled or processed in a particular criticality mode (CMᵢ) and which not.

9. The method according to one of claims 6 to 8, wherein handling of exceptions is adapted (S3) to individual criticality modes (CMᵢ).

10. The method according to one of claims 6 to 9, wherein use of memory is adapted (S3) by allowing access only to memory that is reserved in advance for a particular criticality mode (CMᵢ).

11. The method according to one of claims 6 to 10, wherein handling of caches is adapted (S3) by flushing caches when switching between particular criticality modes (CMᵢ).

12. The method according to one of claims 6 to 11, wherein interprocess communication is adapted (S3) by distinguishing at least between two or more of allowed interprocess communication, forbidden interprocess communication, and limited interprocess communication.

13. A computer program code comprising instructions, which, when executed by at least one processor, cause the at least one processor to perform a method according to any of claims 1 to 12 of operating a microkernel-based operating system.

14. A processing system (20) comprising at least one processing core (CCᵢ) on which a microkernel-based operating system is running, wherein the processing system (20) is configured to:
- operate (S1) the microkernel-based operating system in a first criticality mode (CMᵢ) of a plurality of supported criticality modes (CMᵢ);
- determine (S2) a condition (Cᵢ) that requires a transition to a second criticality mode (CMᵢ) of the plurality of supported criticality modes (CMᵢ);
- adapt (S3) settings of the microkernel-based operating system in accordance with the second criticality mode (CMᵢ); and
- operate (S4) the microkernel-based operating system in the second criticality mode.

15. A motor vehicle (30), **characterized in that** the motor vehicle (30) comprises a processing system (20) according to claim 14.
